Europäisches Patentamt

European Patent Office

Office européen des brevets

(11) Publication number: **0 419 145 A1**

# EUROPEAN PATENT APPLICATION

(21) Application number: **90310072.5**

(22) Date of filing: **14.09.90**

(51) Int. Cl.5: **G06K 11/12**

(30) Priority: **22.09.89 GB 8921473**

(43) Date of publication of application:
**27.03.91 Bulletin 91/13**

(84) Designated Contracting States:
**AT BE DE ES FR GB IT NL SE**

(71) Applicant: **PSION PLC**
**Alexander House, 85 Frampton Street**
**London, NW8 8NQ(GB)**

(72) Inventor: **Gretton, Mark Jonathon**
**c/o Alexander House, 85 Frampton Street**
**London, NW8 8NQ(GB)**
Inventor: **Riddiford, Martin Phillip, c/o Frazer**
**Design**
**Consultants Limited, 6 Hampstead West**
**224 Iverson Road, London NW6 2HL(GB)**

(74) Representative: **Skone James, Robert Edmund**
**et al**
**GILL JENNINGS & EVERY 53-64 Chancery**
**Lane**
**London WC2A 1HN(GB)**

(54) **Input device.**

(57) An input device (4) comprises a position location system for determining the position of an indicator relative to a predetermined coordinate system. A pressure responsive switch (33) is mounted under the position location means; and a coupling arrangement (20,21) is positioned between the position location system and the switch such that when sufficient pressure is applied to the position location system, that pressure is transferred to the coupling arrangement which moves to actuate the switch. The coupling arrangement comprises at least two plates (20,21) which are pivoted together and extend be- neath the position location system so that substan- tially the same pressure must be applied at any position on the position location system to actuate the switch.

*Fig.2.*

# INPUT DEVICE

The invention relates to input devices for example for generating signals to be fed to a computer system.

Input devices or digitisers are frequently used in computer systems and the like for controlling the movement of a cursor or icon on a monitor. Many known input devices require the use of a special pen coupled electrically with a sensing assembly so that the position of the pen on the input device can be sensed and conveyed to the computer system so as to control the position of the cursor. An example of a known input system is described in US-A-3449516.

Generally, the use of a special indicator or pen is undesirable and more recently, input devices have been described which allow the use of the user's own pen or at least an indicator device which is not connected with the computer system. Examples of such input devices are described in US-A-3911215 and US-A-4220815. These latter devices generally require the use of two spaced, resistive sheets which are pressed together by the indicating device so as to provide an electrical circuit whereupon the impression of electrical fields across the surfaces determines the point of contact of the indicating device.

Recently, portable computers such as lap top computers have been developed and with these it is undesirable for there to be a need to use a separate indicating device with the input device. Preferably, it should be possible for the user to use his finger to activate the input device.

An example of an input device which is actuatable by a user's finger is described in GB-A-2139762. This device can sense the position of the user's finger on a touch-sensitive surface so as to detect the X-Y position. If a user wishes to generate an execution signal, he gives a short tap which is detected and then input to the computer system. The arrangement described in this document detects the tap by monitoring the time during which a circuit between the two layers in closed and the distance of movement made by the finger. If the closure time is less than a predetermined time and the touch movement is less than certain defined X and Y distances then a tap is detected.

This known input device suffers from a number of disadvantages. Firstly, it relies on a rather indirect method of detecting a tap by monitoring time of closure and degree of movement and can lead to difficulties for a user to perform the necessary tap. Furthermore, there is no positive feel for the user that the execution signal has been generated. Secondly, if this input device was to be incorporated into a portable computer system there is a significant risk that the execution signal would be inadvertently generated due to general movement of the computer assembly.

The devices described above are resistive devices and input devices based on capacitive principles have also been developed. An example of such a device is described in US-A-4806709 and is believed to be incorporated in a product known as the UnMouse manufactured and sold by Microtouoh Systems Inc. This capacitive device can be finger operated and comprises a transparent screen carrying a uniform coating of resistive material to which are fixed a number of discrete electrodes. The electrodes are connected to a driver circuit so that a regular electric field is produced via the electrodes on the coating. By measuring the voltages of each electrode, it is possible to determine the point of contact on the screen of a finger or stylus. There is no discussion as to how the input device described could be used to input information.

In accordance with one aspect of the present invention, an input device comprises position location means for determining the position of an indicator relative to a predetermined coordinate system; a pressure responsive switch mounted under the position location means; and a coupling arrangement between the position location means and the switch such that when sufficient pressure is applied to the position location means, that pressure is transferred to the coupling arrangement which moves to actuate the switch, wherein the coupling arrangement comprises at least two plates which are pivoted together and extend beneath the position location means so that substantially the same pressure must be applied at any position on the position detection means to actuate the switch.

We have devised a new input device which is particularly suitable for use with portable computer systems such as lap top computers in which a pressure responsive switch is used to generate the activating signal and is therefore independent of the position location means with the further advantage that substantially the same pressure must be applied to the position location means to activate the switch. This arrangement has the further advantage that a snap action switch can be used so that the user obtains a feedback response from the switch itself and so knows that the switch has been actuated. For example, a click sound or the like could be generated by the switch when it is actuated.

The facility of equalizing pressure across the position location means is achieved by using the special form of coupling arrangement.

Preferably, the plates of the coupling arrangement are hinged together and in the most preferred construction, an activating member such as a peg is fixed to the underside of one of the plates and engages the switch so as to activate the switch when pressure is applied.

Preferably, the input device further comprises a frame in which the position location means is secured, the coupling arrangement being pivotally mounted to the frame beneath the position location means, wherein the coupling arrangement engages the housing so that when pressure is applied to the position location means, the frame moves relative to the housing and causes movement of the coupling arrangement relative to the housing thereby actuating the switch.

The position location means could comprise a capacitive based system but preferably is resistive based. The advantage of a resistive based system is that the user can use two pressures with the system. That is, a relatively light pressure is needed to enable the coordinates of the pressure point to be located while a heavier pressure is needed to actuate the switch. In a capacitive system, the user might find it more difficult to determine the pressure required to avoid switch activation but permit coordinate location.

Another difficulty with conventional input devices is that in general they are devised for use with indicating devices or pens with relatively sharp points and are specifically arranged to prevent accidental activation by the user's finger. This is the case with the devices described in US-A-3911215 and US-A-4220815. The device described in GB-A-2139762 is designed to be activated by the user's finger but due to the nature of the materials used and the provision of a spacer member, this device does not accurately indicate the finger position.

In accordance with a second aspect of the present invention, an input device comprises a pair of facing electrically resistive surfaces, one or both of which carry a number of separating spots to maintain the surfaces spaced apart, one of the surfaces being provided on a substrate which is sufficiently flexible to permit the surface to flex closely around a separating spot when pressure is applied to the flexible surface to permit contact to be achieved between the surfaces in response to finger pressure; and sensing means for determining the position of applied pressure by monitoring the resistance of a circuit including the contacting surfaces.

With this aspect of the invention, the effect of the separating spots is minimized when pressure is applied so that a significant portion of the flexible substrate surface will contact the other surface when pressure is applied. Preferably, the sensing means determines the centre of the position of applied pressure.

The separating spots may be silk-screened onto the or each surface and are preferably provided on just one of the surfaces, usually the non-flexible surface. The flexible substrate itself is preferably made of a rubber material.

The sensing means or position location means may have any conventional form but in the preferred arrangement is similar to that described in US-A-3449516.

An example of an input device according to the invention will now be described with reference to the accompanying drawings, in which:-

Figure 1 is a schematic, perspective view of a lap top computer incorporating the device;

Figure 2 is a cross-section through the device shown in Figure 1;

Figure 3 is an exploded view of the input device with some parts omitted for clarity;

Figure 4 is a cross-section through the digitiser shown in Figure 2; and,

Figure 5 is a schematic plan of the digitiser.

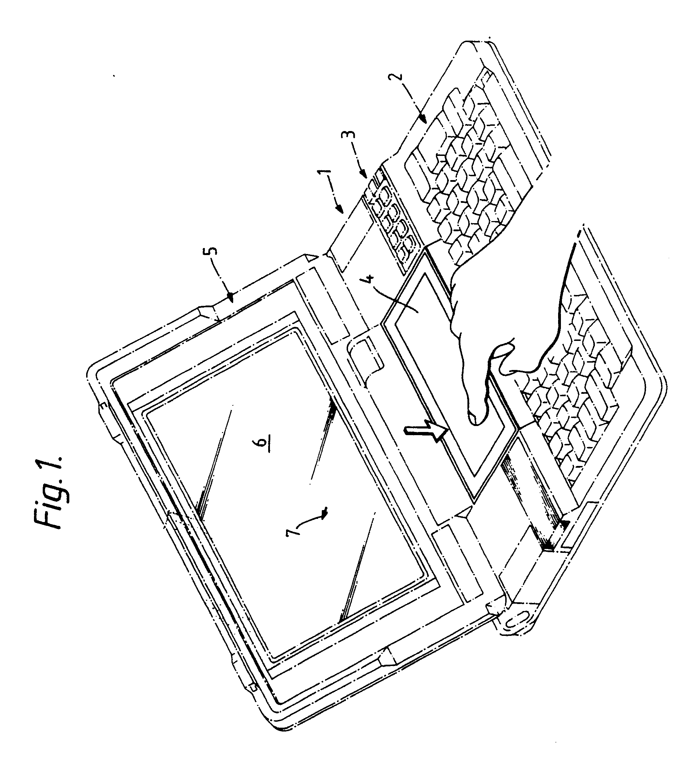

The computer shown in Figure 1 comprises a base 1 on which is provided a keyboard 2 of conventional form, a set of function keys 3, and a digitiser 4. The base 1 is hinged to a lid 5 incorporating a monitor screen 6 coupled to a processing device contained within the base 1 to which the keyboard 2, function keys 3 and digitiser 4 are also connected. The lid 5 is pivotable between the open position shown and a closed position for carrying purposes in which it overlies the digitiser 4 and keyboard 2.

The digitiser 4 is responsive to finger pressure, as shown, to enable a cursor 7 on the monitor screen 6 to be moved so as to enable various functions to be performed.

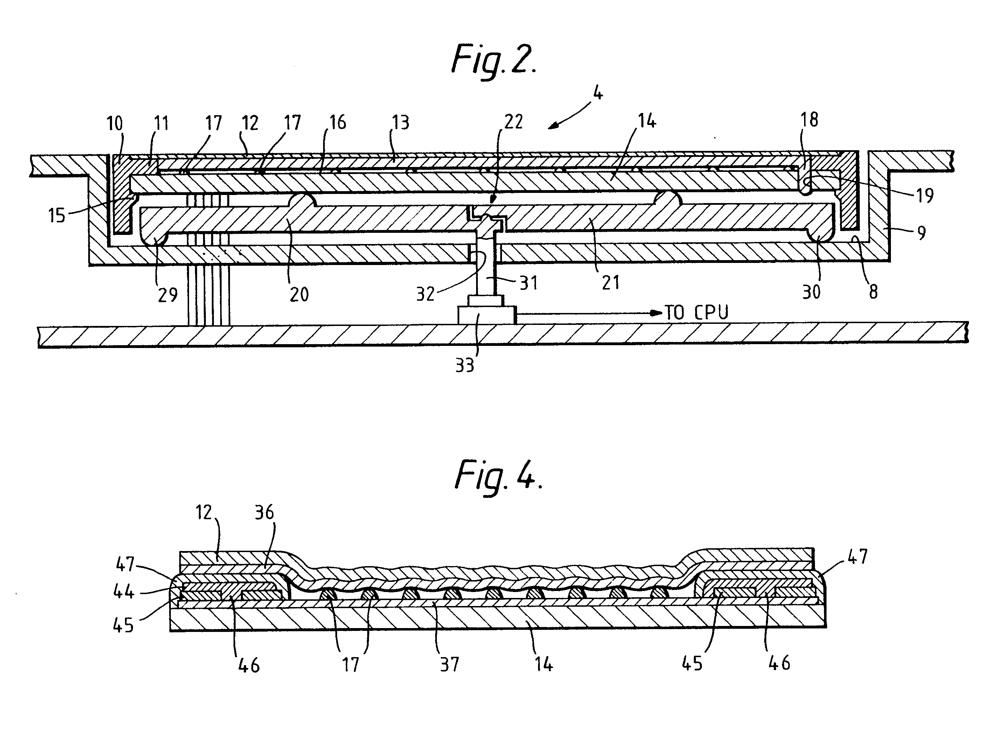

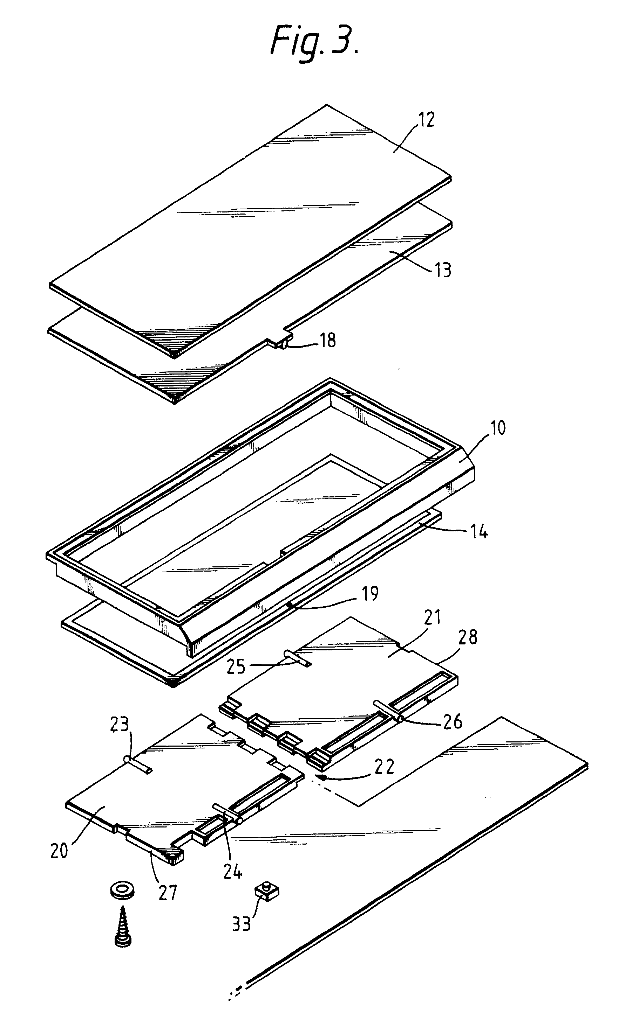

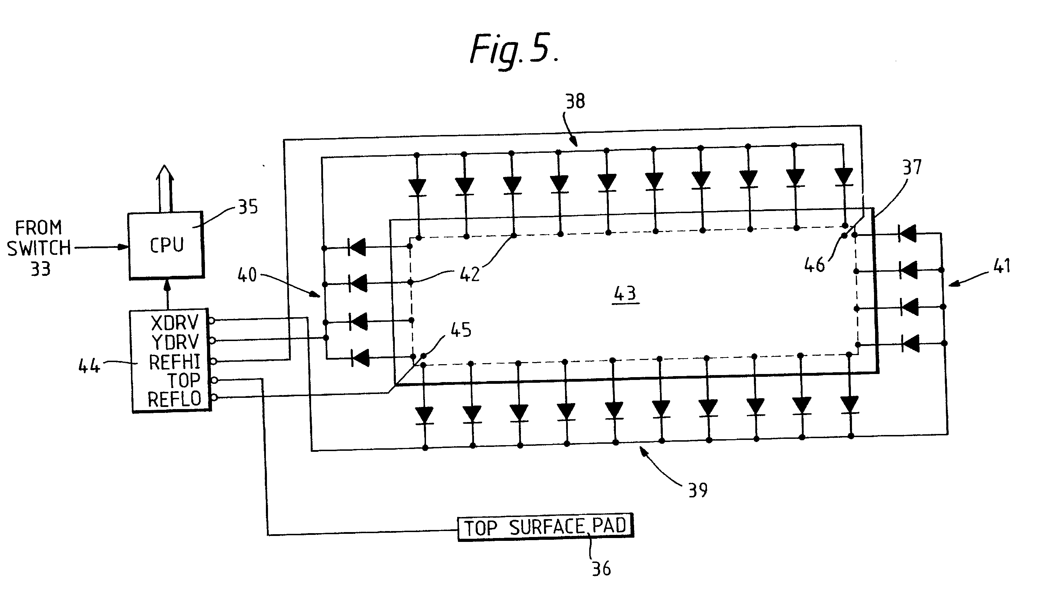

The digitiser 4 is shown in more detail in Figures 2 and 3. The digitiser is mounted in a recess 8 of a housing 9 forming part of the frame of the base 1. The digitiser includes a rectangular frame 10 with an inwardly facing, upper flange 11 supporting an upper member 12 formed from transparent, label materials, such as polycarbonate or polyester providing a relatively slippery surface and having a thickness of about 0.2mm. The underside of this layer 12 is printed with a grid pattern to assist use of the digitiser. Bonded to the underside of the layer 12 is a rubber sheet 13 the underside of which has a continuous, conductive coating 36 (Figure 4).

Beneath the rubber sheet 13 is mounted a printed circuit board 14 located in position in the frame 10 between the flange 11 and another, inwardly facing flange 15. The upper surface 16 of the printed circuit board 14 carries a continuous, conductive coating 37 (Figure 4) with a resistance of about 10K ohms per square and also a rectangular array of 12 x 36 insulating spots 17 (only shown schematically in Figure 2). The spots 17 are printed on the surface 16 with a 4mm spacing and a height between 0.004 and 0.006 inches and maintain the two conductive surfaces spaced apart. An electrical connection is achieved between the rubber sheet 13 and the printed circuit board 14 via a depending peg extension 18 of the rubber sheet which itself is coated with an electrically conductive material and is received in an aperture 19 in the printed circuit board for electrical connection to the sensing circuitry (not shown).

Beneath the printed circuit board 14 is mounted a coupling arrangement comprising a pair of moulded plates 20, 21 which are hinged together at 22. The upper surfaces of each of the plates 20, 21 carry a pair of pegs 23, 24 and 25, 26 resepectively which clip into respective bores (not shown) in the frame 10 so that the plates 20, 21 are pivotally mounted to the frame. Along the underside of the edges 27, 28 of the plates 20, 21 are provided downwardly facing flanges 29, 30 which bear against the bottom surface of the recess 8 of the housing.

An activating peg 31 is integrally moulded with the plate 20 on its underside beneath the hinge 22 and extends through an aperture 32 in the base of the recess 8 into contact with a switch 33. The switch 33 is a snap action switch and contains a compression spring (not shown) to force the activating peg 31 to a non-activating position as shown in Figure 2 and hence holds the frame 10 in the rest position. The switch 33 is connected to the processing device 34 (Figure 5).

The electrical arrangement for sensing the position of a finger on the layer 12 is similar to that described in US-A-3449516. The digitiser is based on a potentiometric method. Pressure applied to the flexible, conductive layer 36 causes contact at the point of pressure between the conductive layer 36 and the underlying conductive layer 37 and the processing electronics associated with the digitiser picks off a voltage from this "potentiometer" which is proportional to the physical position of the pressure. To achieve this, four sets of diodes 38-41 are coupled to discrete contact points 42 arranged around a rectangular active area 43 of the layer 37. Each contact point is formed by screen printing a silver track 44 over an insulating dielectric layer 45 of ink with holes 46 in the dielectric layer corresponding to the contact points and through which the screen printed tracks extend. A final layer 47 of dielectric ink is printed over the silver tracking 44 and the resistive layer 37 to form an insulating frame.

The diode sets 38, 40 are connected to a Ydrive terminal of a processing circuit 44 while the diode sets 39, 41 are connected to an X drive port of the processing circuit 44.

In order to minimise errors due to temperature dependent voltage drops across the drive diodes, reference voltages are picked off from the resistive layer 37 at the full scale and zero points of the active area 43, across a diagonal via contact points 45 (low reference) and 46 (high reference) respectively, these contact points being connected to the processing electronics 44. Figure 4 illustrates the construction of one of the contact points 45.

An oscillator (not shown) within the processing electronics 44 generates an alternating voltage and this is applied to the X drive and Y drive ports. Consequently, during the positive half cycle of the alternating voltage, an electric field will be generated across the active area 43 between diode sets 40 and 41 while during the negative half cycle an electric field will be generated across the active area in the orthogonal (Y) direction between the diode sets 38, 39.

When pressure is applied to the conductive layer 36, this will deform around the adjacent spots 17 until it contacts the resistive layer 37. The conductive layer 36 is connected to the input of an analogue to digital converter (not shown) within the processing electronics 44 which measures the pick off voltage and the processing electronics 44 determines the position of the point of applied pressure by reference to whichever of the X and Y drive ports is currently active. This positional information is transmitted to the processing device 35 which then controls the position of a cursor on the monitor screen.

If the user wishes to generate an activating signal in order to activate some function he presses with an increased pressure which is transferred by the coupling arrangement defined by plates 20, 21 to the switch 33 which is activated once the compression spring force has been overcome. When the finger is removed, the compression spring forces the plate 31 upwardly thereby returning the device to the rest position shown in Figure 2.

The function which is performed upon activating the switch 33 will depend on the mode of operation of the computer. For example, menu functions may be displayed in different positions on the screen and the appropriate function will be activated when the switch 33 is activated with the cursor located in the position of the menu function displayed on the monitor screen. Alternatively, a computer may operate in a mode such that there is a default function which is activated upon depression of the switch 33 irrespective of the position of the cursor, the default function acting on information at the position on the screen indicated by the cursor. Other variations are of course possible.

## Claims

1. An input device (4) comprising position location means for determining the position of an indicator relative to a predetermined coordinate system; a pressure responsive switch (33) mounted under the position location means; and a coupling arrangement (20,21) between the position location means and the switch such that when sufficient pressure is applied to the position location means, that pressure is transferred to the coupling arrangement which moves to actuate the switch, wherein the coupling arrangement comprises at least two plates (20,21) which are pivoted together and extend beneath the position location means so that substantially the same pressure must be applied at any position on the position location means to actuate the switch.

2. A device according to claim 1, wherein the plates (20,21) are hinged together.

3. A device according to claim 1 or claim 2, wherein the switch has a spring loaded actuating member (31) which engages the coupling arrangement.

4. A device according to any of the preceding claims, wherein the coupling arrangement includes a depending peg (31) which engages the switch (33).

5. A device according to any of the preceding claims, further comprising a frame (10) in which the position location means is secured, the coupling arrangement being pivotally mounted to the frame beneath the position location means, wherein the coupling arrangement engages the housing so that when pressure is applied to the position location means, the frame moves relative to the housing and causes movement of the coupling arrangement relative to the housing thereby actuating the switch.

6. An input device comprising a pair of facing electrically resistive surfaces (36,37), one or both of which carry a number of separating spots (17) to maintain the surfaces spaced apart, one of the surfaces being provided on a substrate (12) which is sufficiently flexible to permit the surface to flex closely around a separating spot (17) when pressure is applied to the flexible surface to permit contact to be achieved between the surfaces in response to finger pressure; and sensing means (44) for determining the position of applied pressure by monitoring the resistance of a circuit including the contacting surfaces.

7. A device according to claim 6, wherein the flexible substrate comprises a rubber material.

8. An input device according to claim 6 or claim 7 and any of claims 1 to 5.

9. A computer system incorporating an input device according to any of the preceding claims.

Fig. 1.

EP 0 419 145 A1

Fig.2.

Fig.4.

# Fig. 3.

Fig.5.

EP 0 419 145 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | GB-A-2 139 762 (GAVILAN COMPUTER CORP.) * abstract; figures 1,3 * | 1,6,8,9 | G 06 K 11/12 |
| D,X | US-A-3 911 215 (G.S. HURST et al.) * column 3, line 17 - column 4, line 22; figures 1,5 * | 6 | |
| A,D | US-A-4 220 815 (W.A. GIBSON et al.) * column 3, lines 3-21; figure 2 * | 6,9 | |

TECHNICAL FIELDS SEARCHED (Int. Cl.5)

G 06 F 3/00
G 06 K 11/00

The present search report has been drawn up for all claims

| Place of search | Date of completion of the search | Examiner |
|---|---|---|
| BERLIN | 29-11-1990 | DUCREAU F B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)